Europäisches Patentamt

European Patent Office

Office européen des brevets

(11) Veröffentlichungsnummer: **0 256 459**
**A2**

(12) **EUROPÄISCHE PATENTANMELDUNG**

(21) Anmeldenummer: 87111497.1

(22) Anmeldetag: 08.08.87

(51) Int. Cl.4: **C01G 49/06** , G11B 5/706

(30) Priorität: 09.08.86 DE 3627133

(43) Veröffentlichungstag der Anmeldung:
24.02.88 Patentblatt 88/08

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Vaeth, Guenter**
**Woogstrasse 35**
**D-6703 Limburgerhof(DE)**
Erfinder: **Ohlinger, Manfred, Dr.**
**Anselm-Feuerbach-Strasse 13**
**D-6710 Frankenthal(DE)**
Erfinder: **Rudolf, Peter, Dr.**
**Nibelungenweg 14**
**D-6701 Maxdorf(DE)**

(54) Verfahren zur Herstellung von nadelförmigem, ferrimagnetischem Eisenoxid.

(57) Die Erfindung betrifft ein Verfahren zur Herstellung von nadelförmigem, ferrimagnetischem Eisenoxid durch Tempern von im wesentlichen aus Lepidokrokit bestehendem und mit Zinndioxid modifiziertem Eisen(III)-oxidhydroxid bei Temperaturen zwischen 350 und 800°C und anschließender Reduktion bei Temperaturen zwischen 350 und 600°C mit in diesem Temperaturbereich zersetzlichen organischen Polymeren zum Magnetit und anschließender Oxidation des Magnetits mit sauerstoffhaltigen Gasen bei 200 bis 400°C zum Gamma-Eisen(III)-oxid.

EP 0 256 459 A2

## Verfahren zur Herstellung von nadelförmigen, ferrimagnetischem Eisenoxid

Die Erfindung betrifft ein Verfahren zur Herstellung von nadelförmigem ferrimagnetischem Eisenoxid durch Reduktion von im wesentlichen aus Lepidokrokit bestehendem und mit Zinndioxid modifiziertem Eisen(III)-oxidhydroxid bei Temperaturen zwischen 350 und 600°C mit in diesem Temperaturbereich in Gegenwart von Eisenoxid zersetzlichen organischen Verbindungen zum Magnetit und anschließender Oxidation des Magnetits mit sauerstoffhaltigen Gasen bei 200 bis 400°C.

Nadelförmige ferrimagnetische Eisenoxide, wie z.B. Magnetit und Gamma-Eisen(III)-oxid, werden seit langem in großem Umfang als magnetisierbares Material bei der Herstellung von magnetischen Aufzeichnungsträgern eingesetzt. Zur Herstellung des vor allem verwendeten Gamma-Eisen(III)-oxids sind bereits eine Vielzahl von Verfahren bekannt geworden. Unter anderem wird auch die Reduktion von synthetischem Lepidokrokit in Gegenwart zersetzlicher organischer Verbindungen zum Magnetit mit anschließender Oxidation zum Gamma-Eisen(III)-oxid beschrieben (US-A 2 900 236, DE-A 28 05 405, DE-A 28 05 621 und DE-A 31 43 870). Das Aufbringen von organischen, meist langkettigen Substanzen auf den Lepidokrokit bzw. seines Entwasserungsproduktes soll im Rahmen des Unwandlungsprozesses Versinterungen der Teilchen einschränken und somit zu einem formstabilen und damit gut magnetisch orientierbaren anisotropen Material führen. Es wurde auch schon vorgeschlagen, die Eisenoxide vor der Reduktion mit anorganischen Substanzen formstabilisierend auszurüsten, wie z.B. mit Phosphaten, Phosphaten und Boraten (DE-A 27 43 298) sowie Zinnverbindungen (DE-C 19 07 691, DE-A 32 04 547).

Nachteilig an diesen Verfahren ist jedoch, daß die damit erzielbaren Koerzitivfeldstärken auf etwa 26 kA/m beschränkt sind. Um höhere Werte zu erreichen, sind zusätzliche Maßnahmen erforderlich, wie z.B. die Entwässerung des Lepidokrokits vor dem Aufbringen des organischen Materials für die Reduktion (DE-OS 28 05 405), das dampfförmige Einbringen des organischen Reduktionsmaterials (DE-OS 29 04 085) oder auch die Reduktion mit Hilfe eines Gemisches aus Wasserstoff und organischem Material. Auf diese Weise lassen sich zwar die Koerzitivfeldstärken der magnetischen Eisenoxide steigern, doch bringen sie eine vergrößerte mittlere Röntgenkristallitgröße und ein verbreitertes Teilchengrößenspektrum bei der Verwendung zur Herstellung magnetischer Aufzeichnungsträger, insbesondere Nachteile hinsichtlich des Rauschverhaltens, der Kopierfestigkeit oder der Aussteuerbarkeit bei hohen Frequenzen.

Der Erfindung lag somit die Aufgabe zugrunde, ein Verfahren zur Herstellung von nadelförmigen ferrimagnetischen Eisenoxiden bereitzustellen, das feinteilige Eisenoxide liefert, die sich durch eine hohe Koezitivfeldstärke auszeichnen und eingesetzt zur Herstellung von magnetischen Aufzeichnungsträgern sich in hoher Packungsdichte und dennoch guter magnetischer Orientierbarkeit in die Schicht einarbeiten lassen und gleichzeitig rauscharme als auch kopierfeste Aufzeichnungsschichten ergeben.

Es wurde nun gefunden, daß sich mit einem Verfahren zur Herstellung von nadelförmigen ferrimagnetischen Eisenoxiden durch Reduktion von Lepidokrokit bei Temperaturen zwischen 350° und 600°C mittels in diesem Temperaturbereich in Gegenwart von Eisenoxid zersetzlichen organischen Verbindungen in einer nichtoxidierenden Atmosphäre zum Magnetit und anschließender Oxidation des Magnetits mit sauerstoffhaltigen Gasen bei 200 bis 400°C zum nadelförmigen ferrimagnetischen Gamma-Eisen(III)oxid die Aufgabe lösen läßt, wenn ein synthetischer Lepidokrokit mit einem Niederschlag aus Zinndioxid versehen wird, dieses Zinndioxid-haltige Produkt oder ein daraus durch Entwässern erhaltenes alpha-Eisen(III)oxid anschließend mit einem organischen Polymeren mit einem Molekulargewicht von größer 3000 beaufschlagt, dann das so ausgerüstete Material bei 350 bis 500°C zum Magnetit reduziert und daraufhin mittels sauerstoffhaltiger Gase bei Temperaturen zwischen 200 und 400°C zum Gamma-Eisen(III)oxid oxidiert wird.

Der für das erfindungsgemäße Verfahren eingesetzte Lepidkrokit läßt sich unter geeigneten Reaktionsbedingungen aus Eisen(II)salzlösungen mit Alkalien unter gleichzeitiger Oxidation z.B. nach der DE-AS 10 61 760 herstellen. Als besonders zweckmäßig hat es sich erwiesen, aus einer wäßrigen Eisen(II)-chloridlösung mittels Alkalien, wie Alkalihydroxid oder Ammoniak, bei Temperaturen zwischen 10 und 36°C und kräftigem Rühren zur Erzeugung feiner Luftblasen, Eisen(III)oxidhydrat-Keime bis zu einer Menge von 25 bis 60 Molprozent des eingesetzten Eisens zu bilden, aus denen dann anschließend bei einer Temperatur zwischen 20 und 70°C und bei einem durch Zusatz weiterer Alkalimengen eingestellten pH-Wert von 4,0 bis 5,8 unter intensiver Luftverteilung durch Zuwachs das Endprodukt entsteht. Nach beendetem Wachstum soll der Feststoffgehalt an Eisen(III)-oxidhydroxid in der wäßrigen Suspension zwischen 10 und 70 g/l, bevorzugt bei 15 bis 65 g/l, liegen. Nach dem Abfiltrieren und Auswaschen des Niederschlags wird das so erhaltene Eisen(III)oxidhydrat bei 60 bis 200°C getrocknet. Auf diese Weise lassen sich stabile Kristallnadeln von Lepidokrokit erhalten, welche nahezu keine dentritischen Verzweigungen aufweisen. Sie haben eine mittlere Teilchenlänge von 0,2 bis 1,5 µm, ein Längen-zu-Dicken-Verhältnis von mindestens 10, üblicherweise 12 bis 40 und eine Teilchenoberfläche, SSA, bestimmt als die spezifische Oberfläche gemäß DIN 66 132 nach dem Einpunkt-Differenzverfahren nach Haul und Dümbgen, von 28 bis 100 $m^2/g$.

Ein solchermaßen hergestellter Lepidokrokit wird zur Herstellung des erfindungsgemäßen Eisenoxids in Wasser aufgeschlämmt. Dieser Suspension wird die Zinn(II)-Verbindung, entweder in Form einer wäßrigen sauren Lösung eines Zinn(II)salzes oder als Emulsion einer zinnorganischen Verbindung, zugegeben. Bei der Verwendung der wäßrigen Zinn(II)salzlösung wird die Ausfällung und damit Auffällung des Zinndioxids auf das in der Suspension vorhandene Eisenoxidmaterial durch die Zugabe basischer Substanzen unter gleichzeitiger Einleitung von Luft bewirkt. Im Falle des Einsatzes zinnorganischer Verbindungen werden diese unmittelbar auf die Eisenoxidoberfläche absorbiert.

Die Menge des aufgebrachten Zinndioxids beträgt 0,2 bis 3 Gew.-%, bezogen auf den eingesetzten Lepidokrokit. Vorzugsweise kommen 0,6 bis 2 Gew.-% zur Anwendung. Dieses aufgebrachte Zinndioxid wirkt formerhaltend bei den nachfolgenden Umwandlungsreaktionen und ergibt in überraschender Weise im Gegensatz zu anderen bekannten Schutzüberzügen auch noch eine Verbesserung der magnetischen Eigenschaften des resultierenden magnetischen Materials.

Der auf diese Weise mit Zinndioxid ausgerüstete Lepidokrokit wird nun zweckmäßigerweise nach einer Temperung bei 350 bis 800°C, vorzugsweise 550 bis 750°C in Luft oder in einer Inertgasatmosphäre, üblicherweise unter Stickstoff, unterzogen. Der Temperprozeß kann diskontinuierlich, z.B. in einem Muffelofen, oder kontinuierlich in einem Drehrohrofen erfolgen. Wird der behandelte Lepidokrokit unmittelbar getempert, sind Maßnahmen zu ergreifen damit der entstehende Wasserdampf rasch abgeführt wird, da durch ein Tempern in Wasserdampfatmosphäre bereits bei Temperaturen unter 400°C eine Versinterung der Nadeln festzustellen ist.

Entsprechend dem erfindungsgemäßen Verfahren wird der mit Zinndioxid ausgerüstete Lepidokrokit oder das nach dem Tempern erhaltene Material auf der Oberfläche mit einem organischen Polymeren mit einem Molekulargewicht von größer 3 000 ausgerüstet. Bei der Ausarbeitung des erfindungsgemäßen Verfahrens hat sich ergeben, daß insbesondere organische Verbindungen mit einem Molekulargewicht zwischen 3 000 und 40 000 in einer Menge von 0,5 bis 5, vorzugsweise 1 bis 3 Gew.-%, bezogen auf das eingesetzte Produkt zu vorteilhaften Ergebnissen führen. Aufgrund des Standes der Technik sollten alle organischen Substanzen, welche unterhalb von 540°C ohne Rückstände von Teer und Asche zersetzlich sind, als Reduktionsmittel geeignet sein. Als vorteilhaft erweisen sich Verbindungen mit einheitlichen molekularem Aufbau.

Die beim erfindungsgemäßen Verfahren eingesetzten organischen Polymeren sind Verbindungen, die nur aus Kohlenstoff und Wasserstoff bestehen. Besonders vorteilhaft ist die Verwendung synthetisch hergestellter Produkte wie z.B. Polyethylene, Polypropylene, Polyester, Polyether, Polycarbonate, weil hier unterschiedliche Molekulargewichtsstufen in einheitlicher Qualität zur Verfügung stehen.

Bei der Durchführung des erfindungsgemäßen Verfahrens wird der mit Zinndioxid ausgerüstete Lepidokrokit bzw. das entsprechende durch Entwässern gewonnene Eisen(III)oxid mit dem üblicherweise als Granulat vorliegenden hochmolekularen organischen Polymeren intensiv mechanisch vermischt und dann während 5 bis 60 Minuten bei einer Temperatur zwischen 350 und 600°C zum Magnetit reduziert. Die Reaktion wird zweckmäßigerweise in einem schwachen Stickstoff-oder Stickstoff/Wasserstoffstrom durchgeführt, um auch das bei der Reaktion entstehende Wasser zu entfernen. Für den Fall, daß ein Stickstoff/Wasserstoffstrom eingesetzt wird, sind bereits Temperaturen bis zu 550°C ausreichend.

Der durch die Reduktion erhaltene Magnetit wird gegebenenfalls anschließend mit sauerstoffhaltigen Gasen zweckmäßigerweise durch Überleiten von Luft, bei 200 bis 380°C zu nadelförmigen ferrimagnetischen Eisenoxiden der Formel $FeO_x$ mit Werten für x von größer 1,33 bis 1,50 oxidiert. Üblicherweise wird die Oxidation bis zur Stufe des Gamma-Eisen(III)oxid geführt (x = 1,5).

Das erfindungsgemäßen hergestellte Gamma-Eisen(III)oxid unterscheidet sich deutlich von den nach den bekannten Umwandlungsverfahren erhaltenen Oxide durch eine höhere Koerzitivfeldstärke auch bei Verwendung sehr feinteiliger Ausgangsmaterialien und auch eine besondere Einheitlichkeit des Materials aus. Für die Verwendung als magnetisches Material bei der Herstellung von magnetischen Auszeichnungsträgern ist die Möglichkeit in der Dispersionsschicht hohe Packungsdichten zu erreichen und die Teilchen besonders gut magnetisch orientieren zu können von Vorteil. Durch eine geringe Röntgenkristallitgröße mit enger Größenverteilung ist die Schaltfeldstärkenverteilung der erfindungsgemäß hergestellten Materialien sehr eng, wodurch sich rauscharme Aufzeichnungsträger ergeben, die dennoch einen geringen Kopiereffekt aufweisen und entsprechend der erhöhten Koerzitivfeldstärke eine gute Aussteuerbarkeit bei hohen Frequenzen zeigen.

Zur Herstellung der magnetischen Auszeichnungsträger werden die erfindungsgemäß hergestellten Gamma-Eisen(III)oxide in polymeren Bindemitteln dispergiert. Als Bindemittel eignen sich die für diesen Zweck bekannten Verbindungen, wie Polyamide, Polyurethane, Mischungen von Polyisocyanaten und höhermolekularen Polyhydroxylverbindungen, Vinylchlorid-Copolymerisate mit Comonomeren, wie Vinylester von Monocarbonsäuren, Estern von aliphatischen Alkoholen und ungesättigten Carbonsäuren, wie Acrylsäure, Methacrylsäure oder Maleinsäure, oder diesen Carbonsäuren selbst, sowie hydroxylgruppenhaltigen Vinylchlorid-Copolymerisate oder Acetate allein oder in Abmischungen. Die Magnetschicht kann zusätzlich noch vernetzt werden. Zur Dispergierung der magnetischen Materialien in der Bindemittellösung werden zweckmäßigerweise übliche Dispergiermittel wie beispielsweise Salze von Fettsäuren, Sojalecithin oder sonstige geeignete Stoffe in Mengen von 0,5 bis 6 Gew.-%, bezogen auf die Einwaage des magnetischen Materials, zugegeben. Außerdem sind Zusätze wie Ester, Carbonsäuren oder Siliconöle in Mengen von 0,5 bis 10 Gew.-% zur verringerung des Reibungskoeffizienten der Magnetschicht üblich. Als weitere Zusatzstoffe können den Dispersionen auch Füllstoffe, wie Ruß, Graphit und/oder nicht magnetisierbare Pulver aus Silikatbasis in bekannter Weise zugesetzt werden. Nach dem Dispergieren erfolgt das Aufbringen der Dispersion mit bekannten Beschichtungseinrichtungen auf übliche Polyethylenterephthalatfolien, wobei ein richtendes Magnetfeld zur Erzielung einer magnetischen Vorzugsrichtung angewendet wird. Nach dem Auftragen und Trocknen der Magnetschicht kann diese mit Vorteil an der Oberfläche vergütet, bzw. geglättet und die beschichtete Folie in den zur Herstellung von Magnetogrammträgern üblichen Maschinen in die gewünschte Bandbreite geschnitten werden.

Die Erfindung sei anhand folgender Beispiele und gegenüber dem Stand der Technik durch Vergleichsversuche näher erläutert.

Die magnetischen Pulverwerte werden durch Messung einer auf ein Stopfgewicht von D = 1,2 g/cm³ gebrachten Oxidprobe mit einem konventionellen schwingmagnetometer bei 160 kA/m Meßfeldstärke bestimmt. Die Koerzitivfeldstärke ($H_c$) wird in [kA/m], die spezifische Remanenz ($M_r/\epsilon$) und die spezifische Magnetisierung ($M_m/\epsilon$) werden in [nT.m³/g]angegeben. Die spezifische Oberfläche SSA wird nach DIN 66 132 mittels eines Ströhlein-Areameters der Fa. Ströhlein, Düsseldorf, BRD nach dem Einpunkt-Differenz-Verfahren nach Haul und Dümbgen bestimmt und in [m²/g] angegeben. Ebenfalls mit einem Schwingmagnetometer werden die Magnetband proben bei einer Feldstärke von 160 kA/m untersucht. Angegeben wird die Koerzitivfeldstärke $H_c$, remanente Magnetisierung Mr in [mT] und der Richtfaktor RF, d.h. das Verhältnis der remanenten Magnetisierung längs zur Vorzugsrichtung zu der quer dazu. Die Messung der elektroakustischen Banddaten erfolgt nach DIN 45 512, Teil II gegen das Standardbezugsband. Das Rauschen wird auf das Bezugsband IEC IR 723 DG bezogen. Die Kopierdämpfung wird in absoluten Werten angegeben. Dazu wird ein 500 Hz-Signal auf ein Band mit einer 12 μm dicken Polyethylenterephthalatträgerfolie und einer 6 μm dicken Magnetschicht aufgezeichnet, das Band bei 25°C 24 Stunden lang im Wickel gelagert und danach das auf den nächsten Bandwickel kopierte Signal im Verhältnis zu dem Originalsignal bestimmt.

Beispiel A 1/0

4 kg eines nadelförmigen Lepidokrokit mit einer spez. Oberfläche SSA von 52 m²/g und einer mittleren Nadellänge 1 = 0,9 μm und einem mittleren Längen-zu Dickenverhältnis (Beispiel A 1/1) von 15 wurden in 50 l Wasser mit einem Intensivrührer 10 Minuten aufgerührt. Dann werden unter Rühren 2 000 ml einer - schwach salzsauren, 76 g $SnCl_2$ enthaltenden Lösung zugegeben und nochmals 5 Minuten intensiv gerührt. Dabei wurde der pH-Wert der Suspension mit NaOH auf 5 bis 6 eingestellt. Nach dem Abfiltrieren und chloridfrei waschen wurde bei 120°C im Umlufttrockneschrank getrocknet.
Die Sn-Analyse ergab 1,03 % Sn (1,3 % $SnO_2$).

Beispiel A 2/0

Es wurde wie in Beispiel A 1/0 verfahren mit dem Unterschied, daß ein Lepidokrokit mit einer SSA von 64 m²/g, mit 1 = 0,7 μm und 1/d = 12 eingesetzt wurde.
Die Sn-Analyse ergab 0,96 % Sn (1,22 % $SnO_2$).

**Beispiel A 1/1 - 4**

Jeweils 200 g des mit $SnO_2$ ausgerüsteten Pigments gemäß Beispiel A 1/0 wurden bei 400°C (Beispiel A 1/1), 500°C (Beispiel A 1/2), 600°C (Beispiel A 1/3), und 700°C (Beispiel A 1/4) eine Stunde bei Luftzutritt getempert. Nach dem Abkühlen wurde die SSA gemessen. Die Ergebnisse sind in Tabelle 1 angegeben.

**Vergleichsversuch V 1/1 - 4**

Jeweils 200 g des gemäß Beispiel A 1/0 erhaltenen Produkts, jedoch ohne $SnO_2$-Ausrüstung wurden ebenfalls bei 400°C (V 1/1), 500°C (V 1/2), 600°C (V 1/3) und 700°C (V 1/4) eine Stunde bei Lufteintritt getempert. Die SSA wurden gemessen. Die Ergebnisse sind in Tabelle 1 angegeben.

**Beispiel A 2/1 - 4**

Es wurde wie in den Beispielen A 1/1 - 4 beschrieben verfahren, jedoch wurde das Material gemäß Beispiel A 2/0 eingesetzt: 400°C (A 2/1), 500°C (A 2/2), 600°C (A 2/3) und 700°C (A 2/4). Die SSA wurde gemessen. Die Ergebnisse sind in Tabelle 1 angegeben.

**Vergleichsversuch V 2/1 - 4**

Jeweils 200 g des gemäß Beispiel A 2/0 erhaltenen Produkts, jedoch ohne $SnO_2$ Ausrüstung wurden bei 400°C (V 2/1), 500°C (V 2/2), 600°C (V 2/3) und 700°C (V 2/4) eine Stunde getempert. Die SSA wurde gemessen. Die Ergebenisse sind in Tabelle 1 angegeben.

### Tabelle 1

| Beispiel Nr. | SSA bei einer Entwässerungstemperatur von | | | |
| | 400° | 500° | 600° | 700° |
|---|---|---|---|---|
| A 1/1-4 | 44,8 | 35,1 | 27,1 | 20,5 |
| V 1/1-4 | 54,8 | 31,7 | 18,8 | 12,4 |
| A 2/1-4 | 44,8 | 36,1 | 27,2 | 20,6 |
| V 2/1-4 | 52,2 | 32,6 | 20,7 | 13,3 |

**Beispiel 3**

200 g des nach Beispiel A 1/0 mit $SnO_2$ ausgerüsteten Materials wurden 75 Minuten bei 700°C in einem Temperofen entwässert und getempert. 150 g des Entwässerungsprodukts wurden mit 3 Gew.-% Polyäthylenwachs mit einem Molekulargewicht von 20.000 sorgfältig gemischt. Die Mischung wird in einem 2 l-Drehkolben bei 550°C in einem $N_2$-Strom innerhalb von einer Stunde zum Magnetit reduziert und mit Luft bei 250°C zum $\gamma$-Eisenoxid oxidiert.
Die Meßergebnisse des Pulvers sind in Tabelle 2 angegeben.

**Vergleichsversuch V 3**

1 000 g Lepidokrokit, hergestellt gemäß Beispiel A 1/0, jedoch ohne $SnO_2$ Ausrüstung wurden in 10 l Wasser 10 Minuten mit einem Intensiv-Rührer aufdispergiert. Danach wurden 24,4 g Wasserglas, gelöst in 500 ml $H_2O$, entsprechend 1,2 % $SiO_2$ (bezogen auf das $\gamma$-FeOOH) zugegeben und der pH-Wert unter Rühren auf 6 bis 7 mit verdünnter Schwefelsäure eingestellt. Die Suspension wurde nach einer Stunde nachgerührt, abfiltriert und bei 130°C im Trockenschrank getrocknet. 200 g des mit $SiO_2$ ausgerüsteten $\gamma$-

FeOOH wurden 75 Minuten bei 700°C im Temperofen entwässert und hernach mit 3 Gew.-% Polyäthylenwachs (MG = 20.000) gemischt. Die Mischung wurde unter den gleichen Bedingungen wie in Beispiel 3 beschrieben zum Magnetit reduziert und mit Luft zum $\gamma$-Eisenoxid oxidiert.
Die Meßergebnisse sind in Tabelle 2 angegeben.

Beispiel 4

200 g des mit $SnO_2$ ausgerüsteten $\gamma$-FeOOH, gemäß Beispiel A 2/0, wurden 75 Minuten bei 600°C an Luft im Temperofen entwässert. Das Entwässerungsprodukt wurde mit 3 Gew.-% Polyäthylenwachspulver (MG = 20.000) sorgfältig vermischt. Die Mischung wurde in einem 2 l-Drehkolben 60 Minuten bei 550°C in einem $N_2$-Strom zum Magnetit reduziert und danach mit Luft bei 250°C zum $\gamma$-Eisenoxid oxidiert.
Die Meßergebnisse sind in Tabelle 2 angegeben.

Beispiel 5

200 g des nach Beispiel A 1/0 mit $SnO_2$ ausgerüsteten Lepidokrokits wurden 75 Minuten bei 750°C unter Luftzutritt im Temperofen entwässert. Das Entwässerungsprodukt wurde mit 3 Gew.-% Polyäthylenwachs (MG = 20.000) sorgfältig gemischt und bei 500°C in einem 2 l-Drehkolben 60 Minuten in einem $N_2$-Strom zu Magnetit reduziert und hernach bei 250°C mit Luft zum $\gamma$-Eisenoxid oxidiert. Die Meßergebnisse sind in Tabelle 2 angegeben.

Beispiel 6

5 kg eines sehr feinteiligen Lepidokrokits mit einer Teilchenlänge 1 = 0,5 $\mu$m und einem 1/d = 14 wurden in der in Beispiel A 2/0 angegebenen Weise in 60 l Wasser mit 1,5 % $SnO_2$ ausgerüstet. Das getrocknete Produkt wurde nach Vermischen mit 2,5 Gew.-% Polyäthylenwachs (MG = 20.000) ohne Vorentwässerung in einem Drehrohr bei 500°C in einem $N_2$-Strom innerhalb einer Stunde zu Magnetit reduziert und bei 250°C mit Luft zu $\gamma$-Eisenoxid oxidiert. Die Meßergebnisse sind in Tabelle 2 angegeben.

Vergleichsversuch V 6

Es wurde wie in Beispiel 6 beschrieben verfahren, der Lepidokrokit wurde jedoch mit 1,5 Gew.-% $SiO_2$ gemäß Vergleichsversuch V 3 ausgerüstet und ebenfalls eine Vorentwässerung reduziert.
Die Meßergebnisse sind in Tabelle 2 angegeben.

Beispiel 7

5 kg eines Lepidokrokits mit SSA = 50,3 $m^2$/g, einer Teilchenlänge 1 = 0,8 $\mu$m und einem 1/d = 16 wurden gemäß den Angaben des Beispiels A 1/0 mit 0,64 Gew.-% $SnO_2$ ausgerüstet, mit 2,5 Gew.-% Polyäthylenwachs (MG = 20.000) gemischt und in einem Drehrohr bei 470°C 40 Minuten lang in einem $N_2/H_2$-Gasstrom (1:1) zu Magnetit reduziert und bei 250°C mit Luft zum $\gamma$-Eisenoxid oxidiert.
Die Meßergebnisse sind in Tabelle 2 angegeben.

Beispiel 8

Es wurde wie in Beispiel 7 beschrieben verfahren, jedoch wurde der Lepidokrokit mit 1,3 Gew.-% $SnO_2$ ausgerüstet.
Die Meßergebnisse sind in Tabelle 2 angegeben.

Beispiel 11

Mit dem gemäß Beispiel 10 erhaltenen Gamma-Eisen(III)oxid-Material wurde eine Magnetpigmentdispersion und anschließend ein Magnetband hergestellt. Zur Herstellung der Magnetdispersion wurde eine Topfmühle mit 8 000 Teilen Stahlkugeln mit einem Durchmesser von 5 mm gefüllt und anschließend mit 700 Teilen des Magnetmaterials, 420 Teilen eines Gemisches aus gleichen Teilen Tetrahydrofuran und Dioxan, 8,75 Teilen Lecithin, 8,75 Teilen eines neutralen Polyaminoamidsalzes und 210 Teilen einer 20 %igen Lösung eines Copolymerisates aus 80 % Vinylchlorid, 10 % Dimethylmaleinat und 10 % Diethylmaleinat in einem Gemisch aus gleichen Teilen Tetrahydrofuran und Dioxan versehen. Die Mischung wurde 40 Stunden vordispergiert. Anschließend wurden 1 090 Teile einer 10 %igen Lösung eines thermoplastischen Polyurethans aus Adipinsäure, 1,4-Butandiol und 4,4'-Diisocyanatodiphenylmethan in einem Gemisch aus gleichen Teilen Tetrahydrofuran und Dioxan, 0,7 Teilen Polydimethylsiloxan zugesetzt. Nach weiterem 5-stündigem Dispergieren wurde die erhaltene Magnetdispersion unter Druck durch ein Filter von 5 $\mu$m Porenweite filtriert. Mit einem Linealgießer wurde nach der üblichen Technik eine 6 $\mu$m starke Polyethylenterephthalatfolie mit der Magnetdispersion beschichtet und nach Durchlaufen eines Magentfeldes bei Temperaturen zwischen 60 und 100°C getrocknet. Nach der Trocknung hatte die Magnetschicht eine Dicke von 4,4 $\mu$m. Durch Hindurchführen zwischen beheizten Walzen (80°C unter einem Liniendruck von 3 kg/cm) wurde die Magnetschicht verdichtet. Die beschichtete Folie wurde in Bänder von 3,81 mm Breite geschnitten. Die elektroakustische Messung erfolgte nach DIN 45 512, Blatt 2 gegen das Standardbezugsband. Die Meßergebnisse enthält Tabelle 3.

Beispiel 12

Es wurde wie in Beispiel 11 beschrieben verfahren, jedoch unter Einsatz eines gemäß Beispiel 9a hergestellten Gamma-Eisen(III)oxids. Die Meßergebnisse sind in Tabelle 3 angegeben.

Tabelle 3

| Beispiel Nr. | $H_c$ [kA/m] | Mr [mT] | RF | $RG_A$ [dB] | $K_O$ [dB] |
|---|---|---|---|---|---|
| 11 | 30,3 | 159 | 2,9 | −0,4 | 57 |
| 12 | 30,6 | 159 | 3,1 | 0 | 54,5 |
| IEC·I Bezugsband R 723 DG | | | | 0 | 50,5 |

**Ansprüche**

1. Verfahren zur Herstellung von nadelförmigen ferrimagnetischen Eisenoxiden durch Reduktion von Lepidokrokit bei Temperaturen zwischen 350° und 600°C mittels in diesem Temperaturbereich in Gegenwart von Eisenoxid zersetzlichen organischen Verbindungen in einer nichtoxidierenden Atmosphäre zum Magnetit und anschließender Oxidation des Magnetits mit sauerstoffhaltigen Gasen bei 200 bis 400° zum nadelförmigen ferrimagnetischen Gamm-Eisen(III)oxid, dadurch gekennzeichnet, daß ein synthetischer Lepidokrokit mit einem Niederschlag aus Zinndioxid versehen wird, dieses Zinndioxid-haltige Produkt oder ein daraus durch Entwässern enthaltenes alpha-Eisen(III)oxid anschließend mit einem organischen Polymeren mit einem Molekulargewicht von größer 3 000 beaufschlagt, dann das so ausgerüstete Material bei 350 bis 500°C zum Magnetit reduziert und daraufhin mittels sauerstoffhaltiger Gase bei Temperaturen zwischen 200 und 400°C zum Gamm-Eisen(III)oxid oxidiert wird.

2. Verfahren gemäß Anspruch 1, dadurch gekennzeichnet, daß der mit Zinndioxid beaufschlagte Lepidokrokit bei Temperaturen zwischen 350 und 800°C getempert wird.

Beispiel 9

10 kg des in Beispiel 7 verwendeten Lepidokrokits wurde gemäß Beispiel A 1/0 mit 1,5 Gew.-% $SnO_2$ ausgerüstet und bei 700°C 90 Minuten im Temperofen unter Luftzutritt entwässert. Das Entwässerungsprodukt wurde sorgfältig mit 2,5 Gew.-% Polyäthylenwachs (MG = 20.000) gemischt.

a) 4 kg dieser Mischung wurden im Drehrohr im $N_2$-Strom 60 Minuten lang bei 520°C zum Magnetit reduziert.

b) 4 kg der Mischung wurden im Drehrohr im $N_2/H_2$-Strom (1:1) in 40 Minuten bei 430°C zu Magnetit reduziert. Beide Reduktionsprodukte wurden anschließend bei 250°C mit Luft zum $\gamma$-Eisenoxid oxidiert. Die Meßergebnisse sind in Tabelle 2 angegeben.

Beispiel 10

5 kg des gemäß Beispiel 9 mit 1,5 gew.-% $SnO_2$ ausgerüsteten Lepidokrokits wurden bei 750°C 90 Minuten lang unter Luftzutritt im Temperofen entwässert. Das Entwässerungsprodukt wurde mit 2,5 Gew.-% Polyäthylenwachs (MG = 20.000) gemischt und im Drehrohr bei 520°C im $N_2$-Strom in 60 Minuten zum Magnetit reduziert und hernach mit Luft bei 250°C zum $\gamma$-Eisenoxid oxidiert.
Die Meßergebnisse sind in der Tabelle angegeben.

Tabelle 2

| Beispiel Nr. | Hc [kA/m] ($\rho$ = 1,2) | SSA [$m^2/g$] |
|---|---|---|
| 3 | 30,0 | 23,2 |
| V 3 | 26,4 | 25,3 |
| 4 | 29,2 | 25,7 |
| 5 | 30,4 | 24,1 |
| 6 | 27,9 | 24 |
| V 6 | 18,8 | 31,9 |
| 7 | 28,5 | 21,4 |
| 8 | 30,6 | 21,6 |
| 9a | 30,4 | 23,3 |
| 9b | 30,9 | 22,2 |
| 10 | 31,3 | 20,4 |

3. Verfahren gemäß Anspruch 1, dadurch gekennzeichnet, daß die auf den Lepidokrokit oder ein durch Entwässern enthaltenes alpha-Eisen(III)oxid aufgebrachte Menge Zinndioxid 0,2 bis 3 Gew.-% bezogen auf den eingesetzten Lepidokrokit, beträgt.

4. Verfahren gemäß Anspruch 1, dadurch gekennzeichnet, daß auf das Zinndioxid-haltige Produkt ein organisches Polymer mit einem Molekulargewicht zwischen 3 000 und 40 000 in einer Menge zwischen 0,5 und 5 Gew.-%, bezogen auf das eingesetzte Produkt, aufgebracht wird.